# EUROPEAN PATENT APPLICATION

(11) **EP 1 355 438 A1**
(43) Date of publication of application: **22.10.2003**
(21) Application number: 02775536.2
(22) Date of filing: 12.11.2002
(51) Int. Cl.: H04H 1/00

(54) **SI INFORMATION SENDER**

(30) Priority: 13.11.2001 JP 2001347802
(71) Applicant: MATSUSHITA ELECTRIC INDUSTRIAL CO., LTD., Kadoma-shi, Osaka 571-8501 (JP)
(72) Inventor: TAKEUCHI, Yoshiyasu, Yokohama-shi, Kanagawa 234-0056 (JP); NAKANISHI, Toru, Takatsuki-shi, Osaka 569-1041 (JP); YOSHIKAWA, Masaaki, Shinjuku-ku, Tokyo 160-0023 (JP)
(74) Representative: Grünecker, Kinkeldey, Stockmair & Schwanhäusser Anwaltssozietät
(86) International application number: JP0211774
(87) International publication number: WO03043238

(57) **Abstract**

The present invention provides an SI information delivery apparatus that can deliver TS packets by one repeater even in cases where there are plural TSes. For this purpose, it has a repeater that provides a parity part of a transmission TS packet of SI information for all TSes with TS-ID and information indicating whether the information is for local TS or for remote TS, and delivers the TS packet, and a filter that extracts TS packet information to be delivered in a pertinent TS on the basis of the above-described information at a preceding stage of MUX for each TS and delivers the TS packet information to MUX. With this configuration, the SI information delivery apparatus can handle SI information of plural TSes by one repeater.

## Description

### BACKGROUND OF THE INVENTION

### Field of the Invention

The present invention relates to an SI information delivery apparatus that delivers SI (Service Information: hereinafter referred to as SI) information (see ISO 13818) about plural transport streams (hereinafter referred to as TS) in digital broadcasting.

### Description of Prior Art

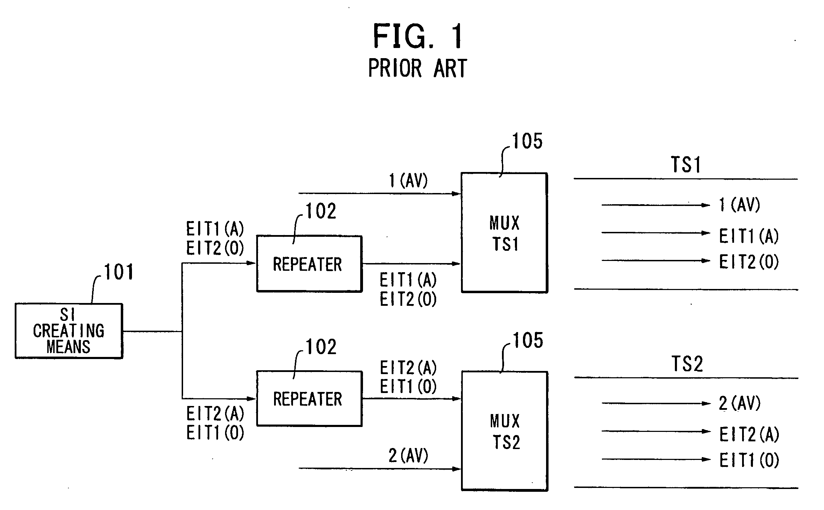

During delivery of SI information about plural TSes in digital broadcasting, as shown in FIG. 1, an SI creating means creates SI information for all TSes as sections as shown in FIG. 1, the information is transferred to a repeater for each TS, each repeater transforms SI information to be delivered in each TS into a TS packet, the SI information is delivered to a multiplexer (hereinafter referred to as MUX) according to the delivery cycle of each piece of SI information, and each MUX multiplexes video information and SI information (Japanese Patent Disclosure No. Hei 11-252516).

If service 1 is broadcast in TS1 and service 2 is broadcast in TS2, the SI creating means creates data EIT1(A) and EIT2(A) for local TS of the services and data EIT21(O) and EIT2(O) for remote TS, and EIT1(A) and EIT2(O) go through a repeater for TS1, and are delivered together with AV information of service 1 by MUX for TS1. EIT2(A) and EIT(O) go through a repeater for TS2, and are delivered together with AV information of service 2 by MUX for TS2. SI information is delivered from the repeaters within a predetermined bandwidth.

However, the SI information delivery apparatus as described above requires as many repeaters as there are TSes to be provided.

### SUMMARY OF THE INVENTION

An object of the present invention is to provide an SI information delivery apparatus that can be configured with a single repeater regardless of the number of TSes and can deliver TS packets to MUX of each TS at a predetermined transfer rate.

The SI information delivery apparatus of the present invention has three characteristics to solve the above-described problem. First, it comprises: an SI information creating means; a TS packet delivery means (repeater) that provides a parity part of a transmission TS packet of SI information for all TSes with TS-ID and attribute information indicating whether the information is for local TS (hereinafter referred to as Actual information) or for remote TS (hereinafter referred to as Other information), and delivers the TS packet; and a filter that extracts TS packet information to be delivered in a pertinent TS on the basis of the attribute information at a preceding stage of MUX for each TS and delivers the TS packet information to MUX. The parity part is a parity part for read Solemon and an information storage part to which data is appended normally in MUX (see the standard ARIB STD-B 31). This enables one TS packet delivery means to handle SI information of plural TSes.

The filter extracts TS packets having local TS-ID and the attribute information of "Actual" and TS packets having remote TS-ID and the attribute information of "Other."

Second, the TS packet delivery means, from the respective amounts (number of TS packets) of Actual information for local TS and Other information for remote TS and the respective delivery cycles of these pieces of information, computes the respective amounts of these pieces of information to be delivered for the duration of a basic cycle and delivers the computed amounts of these pieces of information within the basic cycle. An example of the computation is shown below.
the amount of information to be delivered = number of TS packets/delivery cycle of each piece of information × basic cycle

The delivery of the computed amounts of the information by the TS packet delivery means (repeater) within the basic cycle enables delivery of the respective evened amounts of the Actual information and Other information, providing the effect of delivering TS packets to MUX of each TS at a predetermined transfer rate.

Third, the SI information delivery apparatus has a repeater that, in cases where there are plural pieces of Actual information or Other information for one TS, evens the amount of information about each TS, and successively extracts and delivers the evened amount of information so that information about an identical TS is not continuously delivered. The repeater successively extracts and delivers information about each TS at a ratio of the amount of information about the TS to the amount of information about all TSes, whereby information is dispersed on a TS basis even in cases where there are plural pieces of Actual information or Other information for one TS, with the effect that TS packets can be delivered to MUX of each TS at a predetermined transfer rate.

### BRIEF DESCRIPTION OF THE DRAWINGS

FIG. 1 is a block diagram showing the configuration of a conventional SI information delivery apparatus;
FIG. 2 is a block diagram showing the configuration of an SI information delivery apparatus in one embodiment of the present invention;
FIG. 3 is a diagram illustrating delivery of the respective evened amounts of Actual information and Other information in the above embodiment; and
FIG. 4 is a diagram illustrating even and dispersed delivery of information on a TS basis when there are plural pieces of information for an identical TS in the above embodiment.

### DESCRIPTION OF THE PREFERRED EMBODIMENTS

Hereinafter, an embodiment of an SI information delivery apparatus of the present invention will be described in detail with reference to the accompanying drawings. The present invention is not limited to these embodiments and may be embodied in various forms without departing from the scope and spirit of the present invention.

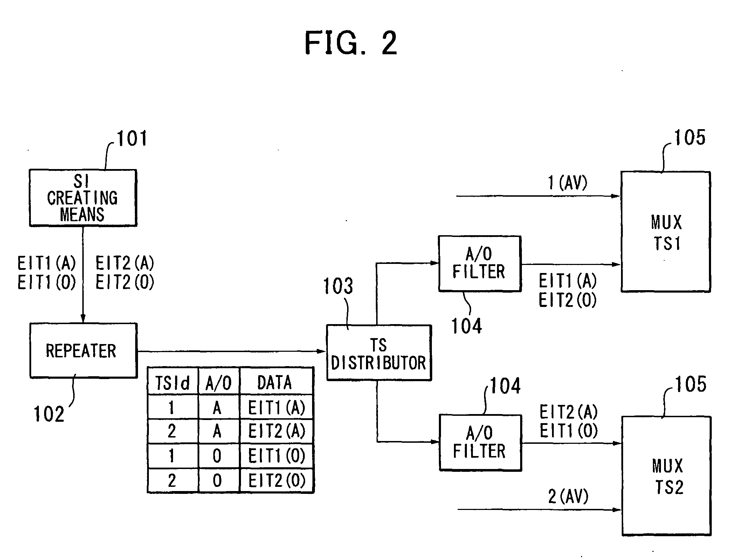

FIG. 2 is a block diagram showing the configuration of an SI information creating apparatus according to one embodiment of the present invention. In FIG. 2, an SI creating means 101 creates SI information of all TSes. A repeater 102 serves as a TS packet delivery means that transforms SI information into a TS packet for repeat transmission. A TS distributor 103 distributes TS packets delivered from the repeater to MUX for proper TSes. A/O filters 104 extract TS packets to be delivered in local TS from TS packets sent from the TS distributor 103 and transfer them to MUX. MUX 105 multiplexes SI information and AV information, and delivers the multiplexed information.

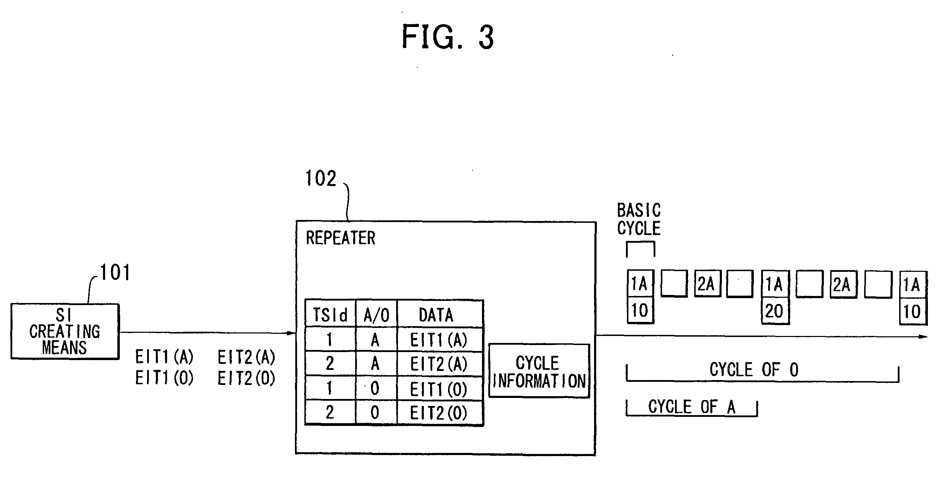

FIG. 3 is a diagram illustrating delivery of the respective evened amounts of Actual information and Other information on an even basis.

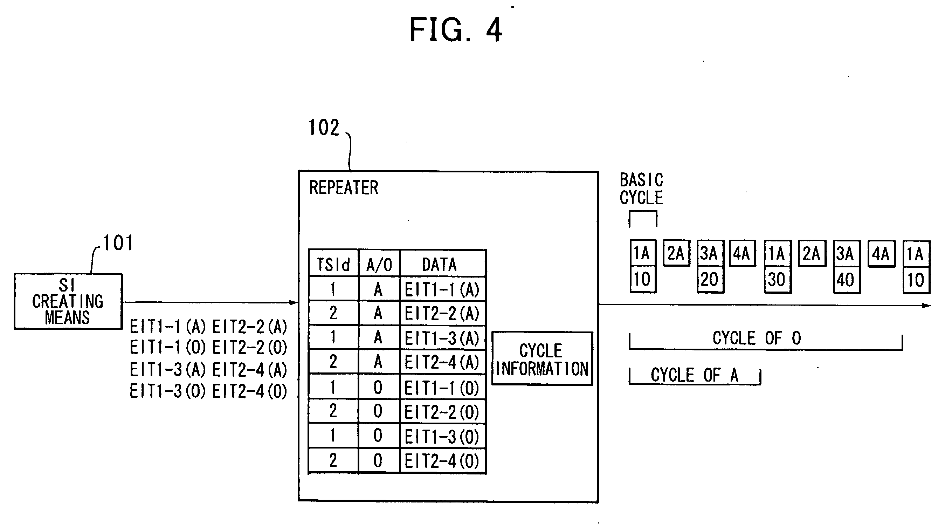

FIG. 4 is a diagram illustrating even and dispersed delivery of Actual information or Other information on a TS basis when there are plural pieces of information for an identical TS.

MUX may be followed by any form of networks such as digital satellite broadcasting, digital CATV, and digital ground wave systems.

The operation of an SI information delivery apparatus configured as described above will be described. The SI creating means 101 creates sections of SI information for all TSes (in FIG. 2, Actual information EIT1(A) and Other information EIT1(0) of service 1 belonging to TS1, and Actual information EIT2(A) and Other information EIT2 (O) of service 2 belonging to TS2), and registers them in the repeater 102. The repeater 102 adds the registered SI information, TS-ID, and information indicating whether the information is for local TS to a parity part (parity part for read Solemon usually containing information added by MUX. Refer to the standard ARIB STD-B 31) of a transmission TS packet. The packeted information is transferred from the repeater 102 to the TS distributor 103. Upon receipt of the packeted information, the TS distributor 103 duplicates the streams and distributes them to the A/O filters 104 of proper TSes.

The A/O filters 104 selects transmission TS packets containing Actual information wherein the parity part of the transmission TS packets contains TS-ID indicating local TS, and transmission TS packets containing Other information wherein the parity part of the transmission TS packets contains TS-ID indicating other than local TS, and delivers them to MUX 105. MUX 105 multiplexes TS packets on AV and TS packets on SI information sent from the A/O filters 104, and delivers the multiplexed packets.

The A/O filters 104 may be included in the MUX 105.

The repeater, during delivery of TS packets, as shown in FIG. 3, from the respective data amounts (number of TS packets) of Actual information and Other information and the respective cycles of these pieces of information, computes the amounts of data to be delivered for the duration of a basic cycle (shorter than the cycles of the information) required to evenly send these pieces of information over the respective cycles (for example, the repeater computes the number of TS packets/delivery cycle of each piece of information x basic cycle), and sends Actual information and Other information independently every the basic cycle. In cases where the amounts of the information are small, since the information is sent evenly over the respective cycles, there may be no data to be sent in some basic cycles.

For example, when the number of TS packets of Actual information is 200, the cycle of the Actual information is 5 seconds, the number of TS packets of Other information is 100, the cycle of the Other information is 10 seconds, and a basic cycle is 0.1 second, there are delivered in one basic cycle four packets of the Actual information (200/5*0.1) and one packet of Other information (100/10*0.1).

In cases where plural pieces of Actual information or Other information exist for one TS as shown in FIG. 4 when TS packets are delivered, the repeater evens the amount of information about each TS (for example, at a ratio of the amount of information about the TS to the amount of information about all TSes), and successively extracts and delivers the evened amount of information, thereby preventing information about an identical TS from being continuously delivered.

Although this configuration allows TS packets of adequately evened SI information to be inputted to MUX of each TS from the A/O filters at a specified transmission rate of SI, an evening buffer may be provided between the A/O filters and MUX to further even transmission rates of TS packets, as required.

As has been described above, this embodiment allows one repeater to deliver SI information of plural TSes to MUX of each TS at a predetermined transmission rate.

The present invention has been described based on a preferred embodiment shown in the drawings. It is obvious to those skilled in the art that the present invention may be changed or modified in various forms without departing from the scope and spirit of the present invention. The present invention also contains such variations.

## Claims

1. An SI information delivery apparatus that delivers SI information for plural transport streams (TS) in a digital broadcasting system, comprising:
SI creating means that create SI information of all TSes;
TS packet delivery means that create a transmission TS packet of SI information for all TSes, provides a parity part of the TS packet of with TS-ID for identifying TS and attribute information indicating whether the information is for local TS (Actual) or for remote TS (Other), and delivers the TS packet; and
a filter, provided at a preceding stage of a multiplexer for each TS, that extracts a TS packet to be delivered in each TS on the basis of said attribute information and delivers the TS packet to the multiplexer.

2. The SI information delivery apparatus according to claim 1, wherein said filter extracts TS packets having local TS-ID and said attribute information of "Actual" and TS packets having remote TS-ID and said attribute information of "Other."

3. The SI information delivery apparatus according to claim 1, wherein the TS packet delivery means, from respective amounts (number of TS packets) of SI information for local TS and SI information for remote TS and respective delivery cycles of such pieces of information, compute the respective amounts of the pieces of information to be delivered for duration of a basic cycle required to evenly send the pieces of information over the respective cycles, and delivers the computed amounts of the pieces of information within the basic cycle.

4. The SI information delivery apparatus according to claim 3, wherein the TS packet delivery means compute the respective amounts of the pieces of information to be delivered for the duration of the basic cycle, using the following expression:
the amount of information to be delivered = number of TS packets/delivery cycle of each piece of information × basic cycle.

5. The SI information delivery apparatus according to claim 3, wherein the TS packet delivery means have a repeater that, in cases where there are plural pieces of information for local TS or remote TS of one TS, evens the amount of information about each TS, and successively extracts and delivers the evened amount of information so that information about an identical TS is not continuously delivered.

6. The SI information delivery apparatus according to claim 5, wherein the TS packet delivery means, to even the amount of information about each TS and successively extract the evened amount of information, successively extract and deliver the information about said TS at a ratio of
the amount of information of the TS/the amount of information of all TSes.
